# EUROPEAN PATENT APPLICATION

(11) **EP 4 691 265 A1**
(43) Date of publication of application: **11.02.2026**
(21) Application number: 24779462.1
(22) Date of filing: 13.03.2024
(51) Int. Cl.: A23L 27/10, A23L 27/00, A23L 27/20

(54) **DRIED SEAFOOD-LIKE FLAVOR MATERIAL AND METHOD FOR PRODUCING DRIED SEAFOOD-LIKE FLAVOR MATERIAL**

(30) Priority: 31.03.2023 JP 2023059463
(71) Applicant: Fuji Oil Company, Limited, Izumisano-shi Osaka 598-8540 (JP)
(72) Inventor: SHIBATA, Munehisa, Izumisano-shi, Osaka 598-8540 (JP); INOUE, Ryota, Izumisano-shi, Osaka 598-8540 (JP)
(74) Representative: Becker, Eberhard
(86) International application number: PCT/JP2024/009773
(87) International publication number: WO 2024/203333

(57) **Abstract**

The purpose of the present invention is to provide a material having a flavor similar to dried seafoods such as simmered-dried fish or salted dried seafoods. The present inventors found that a heat-treated product containing a glutathione-containing yeast extract and a polyvalent unsaturated fatty acid-containing material has a dried seafood-like flavor.

## Description

### Technical Field

The present disclosure relates to a dried seafood-like flavor material and a method for producing the dried seafood-like flavor material.

### Background Art

Sustainable foods such as plant-based foods are attracting attention as a way to address the depletion of animal resources due to future population growth. Likewise, from various viewpoints such as resource conservation and animal protection, in the area of Japanese cuisine as well, a demand has arisen for sustainable Japanese cuisines that do not use animal food products such as dried bonito flakes.

However, soup stock from dried bonito flakes is a foundation (basis) of Japanese cuisine, and delicious Japanese food may be difficult to prepare without dried bonito flakes. In Japan, shojin ryori, a traditional vegan Buddhist cuisine that does not use animal-based food materials such as dried bonito flakes, has existed for a long time and has gained a certain amount of support. However, the reality is that a large demand exists for soup stocks derived from animal-based ingredients such as dried bonito flakes. Regarding the palatability of bonito soup stock, it has been reported that in experiments using mice, bonito-flake soup stock has an "addictive" effect, and therefore it is very likely that humans also instinctively desire bonito soup stock (Non-Patent Document 1).

In addition, since Japanese cuisine has been registered as a UNESCO Intangible Cultural Heritage, the well-balanced and healthy Japanese diet has attracted attention worldwide, and the demand for Japanese food has been rapidly expanding abroad.

However, despite the demand, in order to export dried bonito flakes overseas (particularly to the EU), the dried bonito flakes must be produced in a facility where very strict EU HACCP standards have been cleared, but there are no dried bonito flakes or food products that use ones that satisfy these standards in Japan. Moreover, in countries such as Spain, dried bonito flake factories are increasing locally. However, there are issues with obtaining dried bonito flakes of the same quality as a product from Japan due to various reasons, such as the use of a different type of wood for roasting and drying and the fact that the roasting and drying process has been simplified overseas to meet the EU HACCP standards.

Furthermore, as dried seafood, in addition to dried fish flakes such as dried bonito flakes, dried products of fish and shellfish are also available. An issue with this dried seafood is that the good flavor of the dried seafood immediately after production diminishes as the storage time increases.

Various studies regarding the flavor of the above-described dried fish and dried fish and shellfish have been conducted in the past.

For example, to enhance the flavor of foods that use fish and shellfish, technologies that involve using a heated composition of a glutamic acid-rich yeast extract and a saccharide have been disclosed (Patent Documents 1 and 2). In addition, technology for enhancing a fish flavor by using a heated composition of a polyunsaturated fatty acid or an oxidized polyunsaturated fatty acid (Patent Document 3) has also been disclosed. Moreover, technology for adding a smoke component to an extract seasoning (Patent Document 4), and technology for adding a high-grade dried fish flavor using post-fermented tea leaves or a post-fermented tea leaf extract (Patent Document 5) have also disclosed. Furthermore, technology for sustaining the umami flavor of foods such as dried seafood using a nucleic acid umami component-retaining agent for food, the agent thereof containing a sludge produced in a tea beverage production process, has also been disclosed (Patent Document 6).

### Citation List

### Patent Document

Patent Document 1: JP 2011-155967 A
Patent Document 2: JP 2015-154788 A
Patent Document 3: JP 2012-505647 T
Patent Document 4: JP H08-107769 A
Patent Document 5: JP 2004-049131 A
Patent Document 6: JP H10-108655 A

### Non-Patent Document

Non-Patent Document 1: The Japanese Journal of Taste and Smell Research, Vol. 16, No. 2, pp. 185-188, August 2009

### Summary of Invention

### Technical Problem

In view of the above-described issues, a demand exists for materials that can impart flavors similar to those of dried seafoods, such as dried bonito flakes and other such dried fish flakes and dried products of fish and shellfish.

However, the technologies disclosed in Patent Documents 1 to 6 cannot be said to be materials that can sufficiently impart the flavor of dried seafoods such as dried fish and dried shellfish, and there is sufficient room for improvement.

Thus, an object of the present invention is to provide a dried seafood-like flavor material such as dried fish flakes and dried seafood.

### Solution to Problem

As a result of intensive studies to solve the above-described issues, it has been found that a heat-treated product containing a glutathione-containing yeast extract and/or a cysteine-containing yeast extract, and also a polyunsaturated fatty acid-containing material has a dried seafood-like flavor. Based on such findings, a dried seafood-like flavor material according to the present embodiments was achieved.

That is, the present disclosure provides the following:
(1) A dried seafood-like flavor material, including a heat-treated product containing (A) and (B) set forth below:
   (A) a glutathione-containing yeast extract and/or a cysteine-containing yeast extract; and
   (B) a polyunsaturated fatty acid-containing material.
(2) The dried seafood-like flavor material according to (1), wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.
(3) The dried seafood-like flavor material according to (1), further including a heat-treated product containing (C) a smoke flavoring material.
(4) The dried seafood-like flavor material according to (3), wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.
(5) A method for producing a dried seafood-like flavor material, the production method including mixing (A) and (B) set forth below and heating:
   (A) a glutathione-containing yeast extract and/or a cysteine-containing yeast extract; and
   (B) a polyunsaturated fatty acid-containing material.
(6) The method for producing a dried seafood-like flavor material according to (5), the method further including mixing (C) a smoke flavoring material and heating.
(7) The method for producing a dried seafood-like flavor material according to (5), wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.
(8) The method for producing a dried seafood-like flavor material according to (6), wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.
(9) A method for producing a dried seafood-like flavor material, the method including heating a mixture containing (A) and (B) set forth below:
   (A) a glutathione-containing yeast extract and/or a cysteine-containing yeast extract; and
   (B) a polyunsaturated fatty acid-containing material.
(10) The method for producing a dried seafood-like flavor material according to (9), wherein the method includes heating the mixture further containing (C) a smoke flavoring material.
(11) A food and/or beverage, including the dried seafood-like flavor material described in any one of (1) to (4).
(12) A dried seafood-like flavor-imparting agent for a food and/or beverage, including the dried seafood-like flavor material described in any one of (1) to (4).
(13) A method for imparting a dried seafood-like flavor to a food and/or beverage, the method including adding the dried seafood-like flavor material described in any one of (1) to (4) to the food and/or beverage.
(14) Use of the dried seafood-like flavor material described in any one of (1) to (4) to impart a dried seafood-like flavor to a food and/or beverage.
(15) A dried seafood-like flavor material, including a heat-treated product containing (A) and (B) set forth below and having been subjected to heat treatment at a temperature from 50°C to less than 100°C:
   (A) a glutathione-containing yeast extract and/or a cysteine-containing yeast extract; and
   (B) a polyunsaturated fatty acid-containing material.
(16) The dried seafood-like flavor material according to (15), wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.
(17) The dried seafood-like flavor material according to (15), wherein the dried seafood-like flavor material includes the heat-treated product further containing (C) a smoke flavoring material.
(18) The dried seafood-like flavor material according to (17), wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.
(19) A method for producing a dried seafood-like flavor material, the production method including mixing (A) and (B) set forth below and heating at a temperature from 50°C to less than 100°C:
   (A) a glutathione-containing yeast extract and/or a cysteine-containing yeast extract; and
   (B) a polyunsaturated fatty acid-containing material.
(20) The method for producing a dried seafood-like flavor material according to (19), further including mixing (C) a smoke flavoring material and heating.
(21) The method for producing a dried seafood-like flavor material according to (19), wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.
(22) The method for producing a dried seafood-like flavor material according to (20), wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.
(23) A method for producing a dried seafood-like flavor material, the production method including heating a mixture containing (A) and (B) set forth below at a temperature from 50°C to less than 100°C:
   (A) a glutathione-containing yeast extract and/or a cysteine-containing yeast extract; and
   (B) a polyunsaturated fatty acid-containing material.
(24) The method for producing a dried seafood-like flavor material according to (23), wherein the method includes heating the mixture further containing (C) a smoke flavoring material.
(25) A food and/or beverage, including the dried seafood-like flavor material described in any one of (15) to (18).
(26) A dried seafood-like flavor-imparting agent for a food and/or beverage, the dried seafood-like flavor-imparting agent containing the dried seafood-like flavor material described in any one of (15) to (18).
(27) A method for imparting a dried seafood-like flavor to a food and/or beverage, the method including adding the dried seafood-like flavor material described in any one of (15) to (18) to the food and/or beverage.
(28) Use of the dried seafood-like flavor material described in any one of (15) to (18) to impart a dried seafood-like flavor to a food and/or beverage.

### Advantageous Effects of Invention

According to the present embodiments, a dried seafood-like flavor material having a favorable flavor like that of dried seafood can be provided.

### Description of Embodiments

### (Dried Seafood-Like Flavor Material)

The dried seafood-like flavor material according to the present embodiments is characterized by containing a heat-treated product containing the following (A) and (B). That is,
(A) a glutathione-containing yeast extract and/or a cysteine-containing yeast extract, and
(B) a polyunsaturated fatty acid-containing material.

Preferably, the dried seafood-like flavor material contains a heat-treated product further containing (C) a smoke flavoring material.

Examples of the dried seafood-like flavor of the dried seafood-like flavor material according to the present embodiments include a flavor of dried fish flakes, a flavor of dried fish soup stock, a flavor of shellfish soup stock, and a flavor of dried fish and shellfish.

Examples of dried fish flakes include dried bonito flakes, pieces of sliced dried bonito, dried tuna, dried mackerel, dried horse mackerel, dried sardines, dried Pacific saury, dried round herring, and dried flying fish. Examples of the dried fish soup stock include soup stock of dried fish flakes such as dried bonito flakes, pieces of sliced dried bonito, dried tuna, dried mackerel, dried horse mackerel, dried sardines, dried pacific saury, dried round herring, and dried flying fish.

Other examples include soup stock of shellfish such as ark clams, scallops, Japanese mussels, clams, and mussels, and soup stock made from fish such as eels and conger eels.

Moreover, the dried fish and shellfish product is obtained by naturally drying the fish and shellfish or drying the fish and shellfish with a dryer. Examples of the fish and shellfish include bonito, sardines, Pacific sardines, Pacific saury, mackerel, horse mackerel, sea bream, cod, salmon, herring, flying fish, squid, dried squid, octopus, shrimp, ark clams, scallops, common clams, Manila clams, freshwater mussels, and other shellfish, and sea cucumbers.

The glutathione-containing yeast extract and/or cysteine-containing yeast extract, the polyunsaturated fatty acid-containing material, and the smoke flavoring material in the dried seafood-like flavor material can be contained at any ratio. In solids content of the dried seafood-like flavor material, the content of the glutathione-containing yeast extract and/or the cysteine-containing yeast extract is preferably from 0.1 to 99 mass%, the content of the polyunsaturated fatty acid-containing material is preferably from 0.1 to 99 mass%, and the content of the smoke flavoring material is preferably from 0.1 to 99 mass%.

The lower limit of the content of the glutathione-containing yeast extract and/or the cysteine-containing yeast extract in the solids content of the dried seafood-like flavor material may be more preferably 0.5 mass% or more, 1 mass% or more, 2 mass% or more, 3 mass% or more, 4 mass% or more, 5 mass% or more, 7 mass% or more, 8 mass% or more, or 10 mass% or more.

The upper limit in terms of the solids content may be more preferably 95 mass% or less, 90 mass% or less, 80 mass% or less, 70 mass% or less, 60 mass% or less, 55 mass% or less, 50 mass% or less, 45 mass% or less, 40 mass% or less, or 35 mass% or less.

More specific examples of the content thereof include from 0.1 to 80 mass%, from 0.5 to 70 mass%, from 1 to 60 mass%, from 1 to 55 mass%, from 2 to 50 mass%, from 2 to 40 mass%, from 3 to 40 mass%, from 4 to 40 mass%, from 2 to 35 mass%, and from 3 to 35 mass%.

Moreover, the lower limit of the content of the polyunsaturated fatty acid-containing material in the solids content of the dried seafood-like flavor material may be more preferably 0.5 mass% or more, 1 mass% or more, 2 mass% or more, 3 mass% or more, 4 mass% or more, or 5 mass% or more.

The upper limit thereof in terms of the solids content may be more preferably 95 mass% or less, 90 mass% or less, 80 mass% or less, 75 mass% or less, 70 mass% or less, 65 mass% or less, 60 mass% or less, or 55 mass% or less.

More specific examples of the content thereof include from 0.1 to 80 mass%, from 0.5 to 75 mass%, from 1 to 65 mass%, from 2 to 60 mass%, from 2 to 55 mass%, and from 3 to 55 mass%.

Moreover, the lower limit of the content of the smoke flavoring material in the solids content of the dried seafood-like flavor material may be more preferably 0.5 mass% or more, 1 mass% or more, 2 mass% or more, 4 mass% or more, 5 mass% or more, 7 mass% or more, 8 mass% or more, or 10 mass% or more.

In addition, the upper limit in terms of the solids content may be more preferably 95 mass% or less, 90 mass% or less, 80 mass% or less, 70 mass% or less, 60 mass% or less, 55 mass% or less, 50 mass% or less, 45 mass% or less, or 40 mass% or less.

More specific examples of the content thereof include from 0.1 to 80 mass%, from 0.5 to 75 mass%, from 1 to 65 mass%, from 2 to 60 mass%, from 4 to 55 mass%, from 5 to 55 mass%, from 7 to 50 mass%, from 8 to 50 mass%, from 8 to 45 mass%, and from 10 to 45 mass%.

The dried seafood-like flavor material according to the present embodiments can be used as a dried seafood-like flavor material even without containing an animal-based raw material. The proportion of plant-based raw material in the solids content of the dried seafood-like flavor material is preferably 50 mass% or more in terms of solids content. The proportion thereof is more preferably 55 mass% or more, and is even more preferably 60 mass% or more, 65 mass% or more, 70 mass% or more, 75 mass% or more, 80 mass% or more, 85 mass% or more, 90 mass% or more, or 95 mass% or more. The proportion of plant-based raw material thereof is most preferably 100 mass%.

### (Glutathione-Containing Yeast Extract and/or Cysteine-Containing Yeast Extract)

The glutathione-containing yeast extract can be obtained by extracting a glutathione-containing yeast by a known method such as hot water extraction, enzyme-assisted extraction, or autolytic extraction.

The glutathione-containing yeast extract preferably has a glutathione content of 1 mass% or more per dry mass. The glutathione-containing yeast extract is not particularly limited and may be appropriately selected as long as the extract thereof is edible. Examples of glutathione-containing yeast extracts include brewer's yeast extract, baker's yeast extract, and torula yeast extract.

A commercially available product can be used as the glutathione-containing yeast extract. Examples of commercially available products include the "Springer 4101" yeast extract available from BioSpringer. Other examples of yeast extracts that can be used include "Haition Extract YH-8", "Haition Extract YH-15", "Haition Extract YH-D18", "Aromild U-15", and "Ajipulse KF", all of which are available from Mitsubishi Corporation Life Sciences Limited (Kohjin Life Sciences Co., Ltd.). In addition, yeast extracts such as "Gluta Yeast Extract N" available from Kyowa Hakko Bio Co., Ltd. can be used. Yeast extracts such as "Yeast Extract BSP-783" available from Oriental Yeast Co., Ltd. can also be used. In addition, yeast extracts such as "Hypermeist AP-2515" available from Asahi Group Foods, Ltd. can be used. As yeast extracts available from Ajinomoto Co., Inc., "Super Yeast Extract" and the like can be used.

In addition, a mixture of the glutathione-containing yeast extract and a saccharide can be used, and a heated mixture of the same can also be used.

Examples of the saccharide include monosaccharides, oligosaccharides, and starches. A single type of these saccharides may be used alone, or a combination of two or more may be used. In addition, a liquid sugar containing such saccharides can also be used.

Moreover, the cysteine-containing yeast extract may also be included in the glutathione-containing yeast extract. Further, a yeast extract to which cysteine is added may also be included.

### (Polyunsaturated Fatty Acid-Containing Material)

The polyunsaturated fatty acid-containing material according to the present embodiments contains a polyunsaturated fatty acid at an amount of preferably from 0.01 to 100 mass% in the solids content of the polyunsaturated fatty acid-containing material. The lower limit of the content thereof may preferably be 0.02 mass% or more, 0.03 mass% or more, 0.05 mass% or more, 0.06 mass% or more, 0.08 mass% or more, 0.1 mass% or more, 0.2 mass% or more, 0.3 mass% or more, or 0.5 mass% or more, and the upper limit may be more preferably 50 mass% or less, 40 mass% or less, 30 mass% or less, 20 mass% or less, 10 mass% or less, 5 mass% or less, 3 mass% or less, or 1 mass% or less.

The polyunsaturated fatty acid is a fatty acid with two or more unsaturated C-C bonds.

In a preferred embodiment, the polyunsaturated fatty acid is an ω-3 polyunsaturated fatty acid. Examples of ω-3 polyunsaturated fatty acids include α-linolenic acid, stearidonic acid, eicosatrienoic acid, eicosatetraenoic acid, eicosapentaenoic acid, docosapentaenoic acid, docosahexaenoic acid, tetracosapentaenoic acid, and tetracosahexaenoic acid. In a more preferred embodiment, the ω-3 fatty acid is eicosapentaenoic acid and/or docosahexaenoic acid.

Examples of the polyunsaturated fatty acid-containing material include vegetable oils, seaweed oils, micro algae oils, fish oils, seaweed powders, and extracts extracted from seaweed powders. In addition, materials obtained by separately blending polyunsaturated fatty acids, such as vegetable oils, seaweed oils, micro algae oils, fish oils, seaweed powders, extracts extracted from seaweed powders, or yeast extracts obtained by blending polyunsaturated fatty acids as raw materials, are also included in the polyunsaturated fatty acid-containing material of the present embodiments.

Examples of the vegetable oil include soybean oil, rapeseed oil, and linseed oil.

Examples of the seaweed oils include oils obtained from brown algae, red algae, and green algae.

Examples of brown algae include hijiki, wakame, mekabu, kombu, akamoku, and mozuku. Examples of green algae include kuzurebi and ulva. Examples of the red algae include nori and tengusa.

### (Smoke Flavoring Material)

In the present embodiments, the smoke flavoring material is a material to which a smoke flavor (smoked flavor) is imparted.

Examples of the smoke flavoring material that can be used include smoke-flavored oils and fats (smoked oils), smoke-flavored yeast extracts, liquid smoke, smoked vinegar, smoked soy sauce, smoked salt, smoked paprika, and other seasonings containing a smoke flavoring agent.

Examples of commercially available products of the smoke-flavored oils and fats include "Smoke Oil N-1" (available from Asahi Group Foods, Ltd.) and "Smoked Olive Oil" (available from Kazusa Smoke). Examples of commercially available smoke-flavored yeast extracts include "Grill Yeast B/H" (Higuchi Inc.) and "Smoked Hypermeist A- 1387" (available from Asahi Group Foods, Ltd.).

Among these, a smoke-flavored yeast extract is preferably used in that a smoke flavor can be effectively imparted to the dried seafood-like flavor material.

### (Protein Hydrolysate)

In certain embodiments, a protein hydrolysate can also be used in the present invention. Examples of protein hydrolysates include protein enzymatic hydrolysates obtained by enzymatically decomposing a protein raw material using a proteolytic enzyme.

Another example is a protein acid hydrolysate obtained by hydrolyzing a protein raw material with an acid such as hydrochloric acid or sulfuric acid. A protein enzymatic hydrolysate and a protein acid hydrolysate may be used in combination.

Protein hydrolysates derived from either an animal-based raw material or a plant-based raw material can be used, but one derived from a plant-based raw material is preferred.

The protein enzymatic hydrolysate derived from a plant-based raw material is obtained by using a proteolytic enzyme (protease) to enzymatically decompose a protein raw material derived from a plant-based raw material.

Various protein raw materials obtained by extracting, concentrating, or separating proteins from plant-based raw materials can be used, and the protein content in the protein raw material is preferably 50 mass% or more in terms of the dry mass. The protein content thereof is more preferably 60 mass% or more, 65 mass% or more, 70 mass% or more, 75 mass% or more, 80 mass% or more, 85 mass% or more, or 90 mass% or more.

Examples of the protein raw materials derived from plant-based raw materials include beans such as soybeans, peas, and mung beans, grains such as rice, wheat, barley, and corn, and nuts such as almonds, cashews, walnuts, pistachios, hazelnuts, and macadamia nuts.

Among these, the protein raw material derived from a plant-based raw material is preferably derived from beans such as soybeans, peas, and mung beans, and is more preferably derived from soybeans. As soybean-derived protein enzymatic hydrolysates, for example, commercially available products such as "Hinute AM", "Hinute DC6", "Hinute DH", "Hinute D1", and "Hinute HKB" (all available from Fuji Oil Co., Ltd.) can be used.

The content of the protein hydrolysate in the solids content of the dried seafood-like flavor material is preferably from 0.1 to 10 mass%. The lower limit may be more preferably 0.2 mass% or more, 0.4 mass% or more, 0.5 mass% or more, 0.7 mass% or more, or 0.8 mass% or more. The upper limit thereof may be more preferably 15 mass% or less, 12 mass% or less, 10 mass% or less, or 9 mass% or less.

More specific examples of the content of the protein hydrolysate include from 0.1 to 15 mass%, from 0.2 to 12 mass%, from 0.4 to 10 mass%, from 0.5 to 10 mass%, from 0.7 to 10 mass%, and from 0.8 to 9 mass%.

### (Other Raw Materials)

In some embodiments, nucleic acids such as disodium 5 ' -inosinate, disodium 5 ' - guanylate, and disodium 5 ' -adenylate, amino acids such as glutamate, aspartate, glycine, and alanine, and salts of amino acids such as sodium glutamate, sodium aspartate can be used. In addition, nucleic acids, extracts or yeast extracts containing amino acids or amino acid salts, and seasonings such as fermented seasonings can also be used. Examples of the sources of derivation of the nucleic acids include fish and shellfish, mushrooms, yeast extracts, and fermented seasonings.

In addition, in some embodiments, vegetable extracts and vegetable extract powders from vegetables such as cabbage, carrots, green onions, mushrooms, celery, spinach, shiitake mushrooms, ginger, garlic, onions, and nappa cabbage; sugars such as monosaccharides, disaccharides, oligosaccharides, sugar alcohols, and polysaccharides; starches; salt; thickeners; stabilizers; brewing seasonings such as sake; yeast extracts containing succinic acid; dietary fibers; and proteins can also be used.

### (Method for Producing Dried Seafood-Like Flavor Material)

In the present embodiments, the method for producing the dried seafood-like flavor material can be exemplified by the following method.

The dried seafood-like flavor material can be obtained by mixing (A) a glutathione-containing yeast extract and/or a cysteine-containing yeast extract and (B) a polyunsaturated fatty acid-containing material, and, if necessary, (C) a smoke flavoring material and water, and heating the mixture.

In a case in which water is mixed, the components are mixed with the content of the water being preferably from 0.1 to 99 mass% in relation to the total mass of the glutathione-containing yeast extract and/or cysteine-containing yeast extract, the polyunsaturated fatty acid-containing material, the smoke flavoring material, and the water. The water content can be set according to the target solids content concentration. For example, when the dried seafood-like flavor material is to be used for a straight type soup stock, the amount of water that is added may be set to be large. When the dried seafood-like flavor material is to be used for a concentrated type soup stock, the amount of water that is added may be small.

Another example of a method for producing the dried seafood-like flavor material is as follows.

The dried seafood-like flavor material can also be obtained by preparing, in advance, a mixture obtained by mixing (A) the glutathione-containing yeast extract and/or the cysteine-containing yeast extract and (B) the polyunsaturated fatty acid-containing material, and then optionally mixing water therewith and heating the resulting mixture. Alternatively, the dried seafood-like flavor material can also be obtained by preparing, in advance, a mixture obtained by mixing (A) the glutathione-containing yeast extract and/or the cysteine-containing yeast extract, (B) the polyunsaturated fatty acid-containing material, and (C) a smoke flavoring material, and then optionally mixing water therewith and heating the resulting mixture.

Moreover, as necessary, the mixture may be dried after heating.

For the mixing, various mixers and agitators can be used, and the equipment is not particularly limited. Examples include homomixers and other various mixers, kneaders, colloid mills, propeller agitators, and blenders.

The heating temperature is preferably 50°C or higher. The heating temperature is more preferably 55°C or higher, and is even more preferably 60°C or higher, 65°C or higher, 70°C or higher, or 75°C or higher. The upper limit is preferably less than 100°C, and more preferably 95°C or lower, 90°C or lower, or 85°C or lower. In more specific embodiments, the heating temperature is from 50°C to less than 100°C, from 50°C to 95°C, from 50°C to 90°C, from 60°C to less than 100°C, from 60°C to 95°C, from 60°C to 90°C, from 65°C to less than 100°C, from 65°C to 95°C, from 65°C to 90°C, from 70°C to less than 100°C, from 70°C to 95°C, from 75°C to less than 100°C, from 75°C to 95°C, or the like.

The heating time is preferably 1 minute or longer, and more preferably 2 minutes or longer, 4 minutes or longer, 5 minutes or longer, 8 minutes or longer, 10 minutes or longer, or 15 minutes or longer. The upper limit of the heating time is preferably 120 minutes or less, and more preferably 100 minutes or less, 90 minutes or less, 80 minutes or less, or 70 minutes or less. In more specific embodiments, the heating time is from 1 minute to 120 minutes, from 5 minutes to 100 minutes, from 8 minutes to 90 minutes, from 10 minutes to 80 minutes, from 10 minutes to 70 minutes, from 15 minutes to 80 minutes, from 15 minutes to 70 minutes, or the like.

The form of the dried seafood-like flavor material according to the present embodiments is not particularly limited, and may be a solid, a liquid, or a paste. Examples of the solid form include a powder, granules, and flakes.

### (Application)

The dried seafood-like flavor material according to the present embodiments can be used as is as a solid soup stock in a form such as a powder, granules, or flakes, as a liquid soup stock, or as a soup stock in paste form. Moreover, the dried seafood-like flavor material according to the present embodiments can be blended in various foods and/or beverages.

For example, the dried seafood-like flavor material according to the present embodiments can be blended into soups such as noodle broths, tempura broths, and hot pot broths, ponzu, dashi soup stock bases, clear broth soups (including dried powder products), miso soup (including dried powder products), soups, ramen soups, seasoning liquids for simmered foods, seasoning liquids for hot pot dishes, seasoned vinegars, sauces, dressings, furikake, and dried fish and shellfish products. The dried seafood-like flavor material can also be blended as a raw material in the production of various foods and/or beverages, or can be blended into a food after production.

The amount of the dried seafood-like flavor material according to the present embodiments that is blended into a food and/or beverage is preferably from 0.01 to 50 mass%, more preferably from 0.05 to 40 mass%, and still more preferably from 0.1 to 30 mass%.

The dried seafood-like flavor material according to the present embodiments can impart a dried seafood-like flavor to the food and/or beverage, and thus can also be used as a dried seafood-like flavor-imparting agent.

### Examples

Hereinafter, the present invention is described by way of examples. Note that, in the examples, all parts and percentages are based on mass unless otherwise specified.

### (Example 1 and Comparative Examples 1 to 3) Examination of Dried Bonito-Like Flavor Materials

The raw materials indicated in Table 1 were mixed, and the mixture was heated and stirred for 60 minutes using a stirring and heating device (Mya4 Reaction Station available from Radleys) under conditions including a temperature of 95°C and a rotational speed of 300 rpm, and thereby dried seafood-like flavor materials were obtained. In Comparative Example 3, when the raw materials were stirred with the stirring and heating device, the raw materials were stirred at room temperature without heating, and a dried bonito-like flavor material was obtained.

These dried bonito-like flavor materials were evaluated by five panelists according to the following flavor evaluation criteria, and flavor evaluation scores were determined by consensus of the panelists. A flavor evaluation score of 4 or 3 points was determined to be passing as a dried bonito-like flavor material. The results are listed in Table 1.

### (Flavor Evaluation Criteria)

4 points: A dried bonito-like flavor was very noticeable.
3 points: A dried bonito-like flavor was noticeable.
2 points: A dried bonito-like flavor was not very noticeable.
1 point: A dried bonito-like flavor was not noticeable.

**(Table 1)**

| | | | Example 1 | Comparative Example 1 | Comparative Example 2 | Comparative Example 3 |
|---|---|---|---|---|---|---|
| Name of Raw Material | Product Name | Manufacturer | Formulation (%) | | | |
| | | | The numerical values in parentheses indicate the percentage (%) of the dried bonito-like flavor material in solids content | | | |
| Glutathione-containing yeast extract | Hypermeist AP-2515 | Asahi Group Foods | 6.7 (9) | 0 (0) | 6.7 (9) | 6.7 (9) |
| | Gluta Yeast Extract N | Kyowa Hakko Bio | 6.6 (8.9) | 0 (0) | 6.6 (8.9) | 6.6 (8.9) |
| Polyunsaturated fatty acid-containing material | Akamoku powder | Ise Toba Shima Tokosan Yokocho | 13.3 (17.9) | 13.3 (17.9) | 0 (0) | 13.3 (17.9) |
| | Prorare H | Fuji Oil | 1.0 (1.35) | 1.0 (1.35) | 0 (0) | 1.0 (1.35) |
| Smoke flavoring material | Smoked rock salt | S&B Foods | 25.0 (33.65) | 25.0 (33.65) | 25.0 (33.65) | 25.0 (33.65) |
| Protein hydrolysate | Hinute HKB | Fuji Oil | 1.7 (2.3) | **1.7** (2.3) | 1.7 (2.3) | **1.7** (2.3) |
| Vegetable extract | Mushroom extract | Nikken Foods | 6.7 (9) | 6.7 (9) | 6.7 (9) | 6.7 (9) |
| Seasonings (amino acids, etc.) | Inoichiban | Mitsubishi Corporation Life Sciences | 13.3 (17.9) | 13.3 (17.9) | 13.3 (17.9) | 13.3 (17.9) |
| Dextrin | TK-16 | Matsutani Chemical Industry | 0 (0) | 13.3 (17.9) | 14.3 (19.25) | 0 (0) |
| Water | | | 25.7 | 25.7 | 25.7 | 25.7 |
| Total | | | 100 | 100 | 100 | 100 |
| Heating | | | Yes | Yes | Yes | No |
| Evaluation of dried bonito-like flavor (points) | | | 4 | 2 | 1 | 2 |

As indicated in Table 1, the dried bonito-like flavor material of Example 1 had a very strong dried bonito-like flavor and was excellent. On the other hand, in Comparative Examples 2 and 3, when the glutathione-containing yeast extract or the polyunsaturated fatty acid-containing material was not blended, a dried bonito-like flavor was not sensed. In addition, when the various materials were not heated as in Comparative Example 3, the dried bonito-like flavor was not sensed, and thus it was confirmed that heating is required.

### (Example 2 and Comparative Examples 4 to 6) Examination of Dried Bonito Soup Stock-Like Flavor Materials

The dried bonito-like flavor materials of Example 1 and Comparative Examples 1 to 3 were diluted to 2% to obtain dried bonito soup stock-like flavor materials.

The dried bonito soup stock-like flavor materials were evaluated by five panelists according to the following flavor evaluation criteria, and flavor evaluation scores were determined by consensus of the panelists. A flavor evaluation score of 4 or 3 points was determined to be passing as a dried bonito soup stock-like flavor material. The results are listed in Table 2.

### (Flavor Evaluation Criteria)

4 points: A dried bonito soup stock-like flavor was very noticeable.
3 points: A dried bonito soup stock-like flavor was noticeable.
2 points: A dried bonito soup stock-like flavor was not very noticeable.
1 point: A dried bonito soup stock-like flavor was not noticeable.

**(Table 2)**

| | Example 2 | Comparative Example 4 | Comparative Example 5 | Comparative Example 6 |
|---|---|---|---|---|
| Dried bonito soup stock-like flavor material | 2% diluted product of dried bonito-like flavor material of Example 1 | 2% diluted product of dried bonito-like flavor material of Comparative Example 1 | 2% diluted product of dried bonito-like flavor material of Comparative Example 2 | 2% diluted product of dried bonito-like flavor material of Comparative Example 3 |
| Evaluation of dried bonito soup stock-like flavor (points) | 4 | 2 | 1 | 2 |

As indicated in Table 2, the dried bonito soup stock-like flavor material of Example 2 had a very strong dried bonito soup stock-like flavor and was excellent. On the other hand, the dried bonito soup stock-like flavor materials of Comparative Examples 4 to 6 did not have a dried bonito soup stock-like flavor.

### (Example 3 and Comparative Examples 7 to 9) Examination of Dried-Smoked Mackerel-Like Flavor Materials

The raw materials indicated in Table 3 were mixed, and the mixture was heated and stirred for 60 minutes using a stirring and heating device (Mya4 Reaction Station available from Radleys) under conditions including a temperature of 90°C and a rotational speed of 300 rpm, and thereby dried-smoked mackerel soup stock-like flavor materials were obtained. In Comparative Example 6, when the raw materials were stirred with the stirring and heating device, the raw materials were stirred at room temperature without heating, and a mackerel soup stock-like flavor material was obtained.

These dried-smoked mackerel soup stock-like flavor materials were evaluated by five panelists according to the following flavor evaluation criteria, and flavor evaluation scores were determined by consensus of the panelists. A flavor evaluation score of 4 or 3 points was determined to be passing as a dried-smoked mackerel soup stock-like flavor material. The results are indicated in Table 3.

### (Flavor Evaluation Criteria)

4 points: A dried-smoked mackerel soup stock-like flavor was very noticeable.
3 points: A dried-smoked mackerel soup stock-like flavor was noticeable.
2 points: A dried-smoked mackerel soup stock-like flavor was not very noticeable.
1 point: A dried-smoked mackerel soup stock-like flavor was not noticeable.

**(Table 3)**

| | | | Example 3 | Comparative Example 7 | Comparative Example 8 | Comparative Example 9 |
|---|---|---|---|---|---|---|
| Name of Raw Material | Product Name | Manufacturer | Formulation (%) | | | |
| | | | The numerical values in parentheses indicate the percentage (%) of the dried-smoked mackerel soup stock-like flavor material in solids content | | | |
| Glutathione-containing yeast extract | Gluta Yeast Extract N | Kyowa Hakko Bio | 13.3 (17.9) | 0 (0) | 13.3 (17.9) | 13.3 (17.9) |
| Polyunsaturated fatty acid-containing material | Akamoku powder | Ise Toba Shima Tokosan Yokocho | 13.3 (17.9) | 13.3 (17.9) | 0 (0) | 13.3 (17.9) |
| | Maxavor Fish M YE | DSM | 9.7 (13) | 9.7 (13) | 0 (0) | 9.7 (13) |
| | Prorare H | Fuji Oil | 1.0 (1.3) | 1.0 (1.3) | 0 (0) | 1.0 (1.3) |
| Smoke flavoring material | Smoked rock salt | S&B Foods | 13.3 (17.9) | 13.3 (17.9) | 13.3 (17.9) | 13.3 (17.9) |
| Protein hydrolysate | Hinute HKB | Fuji Oil | 3.7 (5) | 3.7 (5) | 3.7 (5) | 3.7 (5) |
| Vegetable extract | Mushroom extract | Nikken Foods | 6.7 (9) | 6.7 (9) | 6.7 (9) | 6.7 (9) |
| Seasonings (amino acids, etc.) | Inoichiban | Mitsubishi Corporation Life Sciences | 13.3 (17.9) | 13.3 (17.9) | 13.3 (17.9) | 13.3 (17.9) |
| Dextrin | TK-16 | Matsutani Chemical Industry | 0 (0) | 13.3 (17.9) | 24.0 (32.3) | 0 (0) |
| Water | | | 25.7 | 25.7 | 25.7 | 25.7 |
| Total | | | 100 | 100 | 100 | 100 |
| Heating | | | Yes | Yes | Yes | No |
| Evaluation of dried-smoked mackerel-like flavor (points) | | | 4 | 2 | 1 | 2 |

As indicated in Table 3, the dried-smoked mackerel-like flavor material of Example 3 had a very strong dried-smoked mackerel-like flavor and was excellent. On the other hand, in Comparative Examples 7 and 8, when the glutathione-containing yeast extract or the polyunsaturated fatty acid-containing material was not blended, a dried-smoked mackerel-like flavor was not sensed. In addition, when the various materials were not heated as in Comparative Example 9, the dried-smoked mackerel-like flavor was not sensed, and thus it was confirmed that heating is required.

### (Example 4 and Comparative Examples 10 to 12) Examination of Dried-Smoked Mackerel Soup Stock-Like Flavor Materials

The dried-smoked mackerel soup stock-like flavor materials of Example 3 and Comparative Examples 7 to 9 were diluted to 2% to obtain dried-smoked mackerel soup stock-like flavor materials.

These dried-smoked mackerel soup stock-like flavor materials were evaluated by five panelists according to the following flavor evaluation criteria, and flavor evaluation scores were determined by consensus of the panelists. A flavor evaluation score of 4 or 3 points was determined to be passing as a dried-smoked mackerel soup stock-like flavor material. The results are listed in Table 4.

### (Flavor Evaluation Criteria)

4 points: A dried-smoked mackerel soup stock-like flavor was very noticeable.
3 points: A dried-smoked mackerel soup stock-like flavor was noticeable.
2 points: A dried-smoked mackerel soup stock-like flavor was not very noticeable.
1 point: A dried-smoked mackerel soup stock-like flavor was not noticeable.

**(Table 4)**

| | Example 4 | Comparative Example 10 | Comparative Example 11 | Comparative Example 12 |
|---|---|---|---|---|
| Dried-smoked mackerel soup stock-like flavor material | 2% diluted product of dried-smoked mackerel-like flavor material of Example 3 | 2% diluted product of dried-smoked mackerel-like flavor material of Comparative Example 7 | 2% diluted product of dried-smoked mackerel-like flavor material of Comparative Example 8 | 2% diluted product of dried-smoked mackerel-like flavor material of Comparative Example 9 |
| Evaluation of dried-smoked mackerel soup stock-like flavor (points) | 4 | 2 | 1 | 2 |

As indicated in Table 4, the dried-smoked mackerel soup stock-like flavor material of Example 4 had a very strong dried-smoked mackerel soup stock-like flavor and was excellent. On the other hand, the dried-smoked mackerel soup stock-like flavor materials of Comparative Examples 10 to 12 did not have a dried bonito soup stock-like flavor.

### (Example 5 and Comparative Examples 13 to 15) Examination of Dried Clam-Like Flavor Material

The raw materials indicated in Table 5 were mixed, and the mixture was heated and stirred for 60 minutes using a stirring and heating device (Mya4 Reaction Station available from Radleys) under conditions including a temperature of 80°C and a rotational speed of 300 rpm, and thereby dried clam-like flavor materials were obtained. In Comparative Example 9, when the raw materials were stirred with the stirring and heating device, the raw materials were stirred at room temperature without heating, and a dried clam-like flavor material was obtained.

These dried clam-like flavor materials were evaluated by five panelists according to the following flavor evaluation criteria, and flavor evaluation scores were determined by consensus of the panelists. A flavor evaluation score of 4 or 3 points was determined to be passing as a dried clam-like flavor material. The results are listed in Table 5.

### (Flavor Evaluation Criteria)

4 points: A dried clam-like flavor was very noticeable.
3 points: A dried clam-like flavor was noticeable.
2 points: A dried clam-like flavor was not very noticeable.
1 point: A dried clam-like flavor was not noticeable.

**(Table 5)**

| | | | Example 5 | Comparative Example 13 | Comparative Example 14 | Comparative Example 15 |
|---|---|---|---|---|---|---|
| Name of Raw Material | Product Name | Manufacturer | Formulation (%) The numerical values in parentheses indicate the percentage (%) of the dried clam-like flavor material in solids content | | | |
| Glutathione-containing yeast extract | Ajipulse KF | Mitsubishi Corporation Life Sciences | 3.1 (5) | 0 (0) | 3.1 (5) | 3.1 (5) |
| Polyunsaturated fatty acid-containing material | Akamoku powder | Ise Toba Shima Tokosan Yokocho | 31.3 (50.1) | 31.3 (50.1) | 0 (0) | 31.3 (50.1) |
| Protein hydrolysate | Hinute AM-F | Fuji Oil | 6.2 (9.9) | 6.2 (9.9) | 6.2 (9.9) | 6.2 (9.9) |
| Soy milk powder | Low-fat soy milk powder | Nikken Foods | 12.5 (20) | 12.5 (20) | 12.5 (20) | 12.5 (20) |
| Succinic acid | Disodium succinate | Mitsubishi Corporation Life Sciences | 3.2 (5.1) | 3.2 (5.1) | 3.2 (5.1) | 3.2 (5.1) |
| Seasonings (amino acids, etc.) | Inoichiban | Mitsubishi Corporation Life Sciences | 6.2 (9.9) | 6.2 (9.9) | 6.2 (9.9) | 6.2 (9.9) |
| Liquor | Sake for cooking | Takara Shuzo | 12.5 | 12.5 | 12.5 | 12.5 |
| Dextrin | TK-16 | Matsutani Chemical Industry | 0 (0) | 3.1 (5) | 31.3 (50.1) | 0 (0) |
| Water | | | 25.0 | 25.0 | 25.0 | 25.0 |
| Total | | | 100 | 100 | 100 | 100 |
| Heating | | | Yes | Yes | Yes | No |
| Evaluation of dried clam-like flavor (points) | | | 4 | 2 | 1 | 2 |

As indicated in Table 5, the dried clam-like flavor material of Example 5 had a very strong dried clam-like flavor and was excellent. On the other hand, in Comparative Examples 13 and 14, when the glutathione-containing yeast extract or the polyunsaturated fatty acid-containing material was not blended, a dried clam-like flavor was not sensed. In addition, when the various materials were not heated as in Comparative Example 15, the dried clam-like flavor was not sensed, and thus it was confirmed that heating is required.

### (Example 6 and Comparative Examples 16 to 18) Examination of Clam Soup Stock-Like Flavor Materials

The dried clam-like flavor materials of Example 5 and Comparative Examples 13 to 15 were diluted to 2% to obtain clam soup stock-like flavor materials.

These clam soup stock-like flavor materials were evaluated by five panelists according to the following flavor evaluation criteria, and flavor evaluation scores were determined by consensus of the panelists. A flavor evaluation score of 4 or 3 points was determined to be passing as a clam soup stock-like flavor material. The results are indicated in Table 6.

### (Flavor Evaluation Criteria)

4 points: A clam soup stock-like flavor was very noticeable.
3 points: A clam soup stock-like flavor was noticeable.
2 points: A clam soup stock-like flavor was not very noticeable.
1 point: A clam soup stock-like flavor was not noticeable.

**(Table 6)**

| | Example 6 | Comparative Example 16 | Comparative Example 17 | Comparative Example 18 |
|---|---|---|---|---|
| Clam soup stock-like flavor material | 2% diluted product of dried clam-like flavor material of Example 5 | 2% diluted product of dried clam-like flavor material of Comparative Example 13 | 2% diluted product of dried clam-like flavor material of Comparative Example 14 | 2% diluted product of dried clam-like flavor material of Comparative Example 15 |
| Evaluation of clam soup stock-like flavor (point) | 4 | 2 | 1 | 2 |

As indicated in Table 6, the clam soup stock-like flavor material of Example 6 had a very strong clam soup stock-like flavor and was excellent. On the other hand, the clam soup stock-like flavor materials of Comparative Examples 16 to 18 did not have a clam soup stock-like flavor.

### (Example 7 and Comparative Examples 19 to 21) Dried White Fish-Like Flavor Materials

The raw materials indicated in Table 7 were mixed, and the mixture was heated and stirred for 60 minutes using a stirring and heating device (Mya4 Reaction Station available from Radleys) under conditions including a temperature of 80°C and a rotational speed of 300 rpm, and thereby dried clam-like flavor materials were obtained. In Comparative Example 9, when the raw materials were stirred with the stirring and heating device, the raw materials were stirred at room temperature without heating, and a dried white fish-like flavor material was obtained.

These dried white fish-like flavor materials were evaluated by five panelists according to the following flavor evaluation criteria, and flavor evaluation scores were determined by consensus of the panelists. A flavor evaluation score of 4 or 3 points was determined to be passing as a dried white fish-like flavor material. The results are indicated in Table 7.

### (Flavor Evaluation Criteria)

4 points: A dried white fish-like flavor was very noticeable.
3 points: A dried white fish-like flavor was noticeable.
2 points: A dried white fish-like flavor was not very noticeable.
1 point: A dried white fish-like flavor was not noticeable.

**(Table 7)**

| | | | Example 7 | Comparative Example 19 | Comparative Example 20 | Comparative Example 21 |
|---|---|---|---|---|---|---|
| Name of Raw Material | Product Name | Manufacturer | Formulation (%) | | | |
| | | | The numerical values in parentheses indicate the percentage (%) of the dried white fish-like flavor material in solids content | | | |
| Glutathione-containing yeast extract | Super Yeast Extract | Ajinomoto | 25.0 (33.3) | 0 (0) | 25.0 (33.3) | 25.0 (33.3) |
| Polyunsaturated fatty acid-containing material | Akamoku powder | Ise Toba Shima Tokosan Yokocho | 2.5 (3.3) | 2.5 (3.3) | 0 (0) | 2.5 (3.3) |
| | Prorare H | Fuji Oil | 1.25 (1.7) | 1.25 (1.7) | 0 (0) | 1.25 (1.7) |
| Protein hydrolysate | Hinute HKB | Fuji Oil | 1.25 (1.7) | 1.25 (1.7) | 1.25 (1.7) | 1.25 (1.7) |
| Vegetable extract | Mushroom extract | Nikken Foods | 10.0 (13.3) | 10.0 (13.3) | 10.0 (13.3) | 10.0 (13.3) |
| Vegetable oil and/or fat | High-ol 75B | Fuji Oil | 18.8 (25.1) | 18.8 (25.1) | 18.8 (25.1) | 18.8 (25.1) |
| Saccharide | Crystalline hydrated glucose | Showa Sangyo | 10.0 (13.3) | 10.0 (13.3) | 10.0 (13.3) | 10.0 (13.3) |
| Seasonings (amino acids, etc.) | Inoichiban | Mitsubishi Corporation Life Sciences | 6.2 (8.3) | 6.2 (8.3) | 6.2 (8.3) | 6.2 (8.3) |
| Dextrin | TK-16 | Matsutani Chemical Industry | 0 (0) | 25.0 (33.3) | 3.75 (5) | 0 (0) |
| Water | | | 25.0 | 25.0 | 25.0 | 25.0 |
| Total | | | 100 | 100 | 100 | 100 |
| Heating | | | Yes | Yes | Yes | No |
| Evaluation of dried white fish-like flavor (points) | | | 4 | 2 | 1 | 2 |

As indicated in Table 7, the dried white fish-like flavor material of Example 7 had a very strong dried white fish-like flavor and was excellent. On the other hand, in Comparative Examples 19 and 20, when the glutathione-containing yeast extract or the polyunsaturated fatty acid-containing material was not blended, a dried white fish-like flavor was not sensed. In addition, when the various materials were not heated as in Comparative Example 21, the dried white fish-like flavor was not sensed, and thus it was confirmed that heating is required.

### (Example 8 and Comparative Examples 22 to 24) Examination of Eel or Conger Eel Soup Stock-Like Flavor Materials

The dried white fish-like flavor materials of Example 7 and Comparative Examples 19 to 21 were diluted to 2% to obtain white fish soup stock-like flavor materials. In particular, in Example 7, the flavor of the soup stock resembled that of eel or conger eel as a white fish, and therefore the eel or conger eel soup-stock like flavor was evaluated.

The flavor materials were evaluated by five panelists according to the following flavor evaluation criteria, and flavor evaluation scores were determined by consensus of the panelists. A flavor evaluation score of 4 or 3 points was determined to be passing as an eel or conger eel soup stock-like flavor material. The results are indicated in Table 6.

### (Flavor Evaluation Criteria)

4 points: An eel or conger eel soup stock-like flavor was very noticeable.
3 points: An eel or conger eel soup stock-like flavor was noticeable.
2 points: An eel or conger eel soup stock-like flavor was not very noticeable.
1 point: An eel or conger eel soup stock-like flavor was not noticeable.

**(Table 8)**

| | Example 8 | Comparative Example 22 | Comparative Example 23 | Comparative Example 24 |
|---|---|---|---|---|
| Eel or conger eel soup stock-like flavor material | 2% diluted product of dried white fish-like flavor material of Example 7 | 2% diluted product of dried white fish-like flavor material of Comparative Example 19 | 2% diluted product of dried white fish-like flavor material of Comparative Example 20 | 2% diluted product of dried white fish-like flavor material of Comparative Example 21 |
| Evaluation of eel or conger eel soup stock-like flavor (points) | 4 | 2 | 1 | 2 |

As indicated in Table 8, the eel or conger eel soup stock-like flavor material of Example 8 had a very strong eel or conger eel soup stock-like flavor and was excellent. On the other hand, the eel or conger eel soup stock-like flavor materials of Comparative Examples 22 to 24 did not have an eel or conger eel soup stock-like flavor.

## Claims

1. A dried seafood-like flavor material, comprising a heat-treated product containing (A) and (B) set forth below:
(A) a glutathione-containing yeast extract and/or a cysteine-containing yeast extract; and
(B) a polyunsaturated fatty acid-containing material.

2. The dried seafood-like flavor material according to claim 1, wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.

3. The dried seafood-like flavor material according to claim 1, further comprising a heat-treated product containing (C) a smoke flavoring material.

4. The dried seafood-like flavor material according to claim 3, wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.

5. A method for producing a dried seafood-like flavor material, the method comprising mixing (A) and (B) set forth below and heating:
(A) a glutathione-containing yeast extract and/or a cysteine-containing yeast extract; and
(B) a polyunsaturated fatty acid-containing material.

6. The method for producing a dried seafood-like flavor material according to claim 5, further comprising mixing (C) a smoke flavoring material and heating.

7. The method for producing a dried seafood-like flavor material according to claim 5, wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.

8. The method for producing a dried seafood-like flavor material according to claim 6, wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.

9. A method for producing a dried seafood-like flavor material, the method comprising heating a mixture containing (A) and (B) set forth below:
(A) a glutathione-containing yeast extract and/or a cysteine-containing yeast extract; and
(B) a polyunsaturated fatty acid-containing material.

10. The method for producing a dried seafood-like flavor material according to claim 9, wherein the method comprises heating the mixture further containing (C) a smoke flavoring material.

11. A food and/or beverage, comprising the dried seafood-like flavor material described in any one of claims 1 to 4.

12. A dried seafood-like flavor-imparting agent for a food and/or beverage, comprising the dried seafood-like flavor material described in any one of claims 1 to 4.

13. A method for imparting a dried seafood-like flavor to a food and/or beverage, the method comprising adding the dried seafood-like flavor material described in any one of claims 1 to 4 to the food and/or beverage.

14. Use of the dried seafood-like flavor material described in any one of claims 1 to 4 to impart a dried seafood-like flavor to a food and/or beverage.

15. A dried seafood-like flavor material, comprising a heat-treated product, the heat-treated product containing (A) and (B) set forth below and having been subjected to heat treatment at a temperature from 50°C to less than 100°C:
(A) a glutathione-containing yeast extract and/or a cysteine-containing yeast extract; and
(B) a polyunsaturated fatty acid-containing material.

16. The dried seafood-like flavor material according to claim 15, wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.

17. The dried seafood-like flavor material according to claim 15, wherein the dried seafood-like flavor material comprises the heat-treated product further containing (C) a smoke flavoring material.

18. The dried seafood-like flavor material according to claim 17, wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.

19. A method for producing a dried seafood-like flavor material, the method comprising mixing (A) and (B) set forth below and heating at a temperature from 50°C to less than 100°C:
(A) a glutathione-containing yeast extract and/or a cysteine-containing yeast extract; and
(B) a polyunsaturated fatty acid-containing material.

20. The method for producing a dried seafood-like flavor material according to claim 19, the method further comprising mixing (C) a smoke flavoring material and heating.

21. The method for producing a dried seafood-like flavor material according to claim 19, wherein, in solids content of the dried seafood-like flavor material, a content of (A) the glutathione-containing yeast extract and/or the cysteine-containing yeast extract is from 0.1 to 99 mass%, and a content of (B) the polyunsaturated fatty acid-containing material is from 0.1 to 99 mass%.

22. The method for producing a dried seafood-like flavor material according to claim 20, wherein, in solids content of the dried seafood-like flavor material, a content of (A) the glutathione-containing yeast extract and/or the cysteine-containing yeast extract is from 0.1 to 99 mass%, a content of (B) the polyunsaturated fatty acid-containing material is from 0.1 to 99 mass%, and a content of (C) the smoke flavoring material is from 0.1 to 99 mass%.

23. A method for producing a dried seafood-like flavor material, the method comprising heating a mixture containing (A) and (B) set for below at a temperature from 50°C to less than 100°C:
(A) a glutathione-containing yeast extract and/or a cysteine-containing yeast extract; and
(B) a polyunsaturated fatty acid-containing material.

24. The method for producing a dried seafood-like flavor material according to claim 23, wherein the method comprises heating the mixture further containing (C) a smoke flavoring material.

25. A food and/or beverage, comprising the dried seafood-like flavor material described in any one of claims 15 to 18 is blended.

26. A dried seafood-like flavor-imparting agent for a food and/or beverage, the dried seafood-like flavor-imparting agent comprising the dried seafood-like flavor material described in any one of claims 15 to 18.

27. A method for imparting a dried seafood-like flavor to a food and/or beverage, the method comprising adding the dried seafood-like flavor material described in any one of claims 15 to 18 to the food and/or beverage.

28. Use of the dried seafood-like flavor material described in any one of claims 15 to 18 to impart a dried seafood-like flavor to a food and/or beverage.
